# EUROPEAN PATENT SPECIFICATION

(11) **EP 4 167 496 B1**
(45) Date of publication and mention of the grant of the patent: **14.10.2026**
(21) Application number: 21825541.2
(22) Date of filing: 06.05.2021
(51) Int. Cl.: H04B 7/0426, H04B 7/0456, H04B 7/0413, H04B 7/0452

(54) **DATA TRANSMISSION METHOD AND APPARATUS, AND COMMUNICATION NODE AND STORAGE MEDIUM**
DATENÜBERTRAGUNGSVERFAHREN UND -VORRICHTUNG SOWIE KOMMUNIKATIONSKNOTEN UND SPEICHERMEDIUM
PROCÉDÉ ET APPAREIL DE TRANSMISSION DE DONNÉES ET NOEUD DE COMMUNICATION ET SUPPORT DE STOCKAGE

(30) Priority: 15.06.2020 CN 202010544304
(43) Date of publication of application: 19.04.2023
(73) Proprietor: ZTE Corporation, Shenzhen, Guangdong 518057 (CN)
(72) Inventor: ZHANG, Dekun, Shenzhen, Guangdong 518057 (CN)
(74) Representative: Aipex B.V.
(86) International application number: PCT/CN2021/091902
(87) International publication number: WO 2021/254013

(56) References cited:
- WO-A1-2019/158193
- CN-A- 103 152 811
- CN-A- 105 393 623
- CN-A- 110 120 829
- CN-A- 110 120 829
- CN-A- 111 130 606
- CN-A- 111 130 606
- KAMIYA SHOTARO ET AL: "SINR Distribution and Scheduling Gain Analysis of Uplink Channel-Adaptive Scheduling", IEEE TRANSACTIONS ON WIRELESS COMMUNICATIONS, IEEE SERVICE CENTER, PISCATAWAY, NJ, US, vol. 19, no. 4, 10 January 2020 (2020-01-10), pages 2321 - 2335, XP011783046, ISSN: 1536-1276, [retrieved on 20200409], DOI: 10.1109/TWC.2019.2963866

## Description

### TECHNICAL FIELD

The present application relates to wireless communication networks, for example, a data transmission method and apparatus, a communication node and a storage medium.

### BACKGROUND

The multiple-input and multiple-output (MIMO) technology can significantly improve the throughput of a system. With the large-scale application of MIMO, multi-user space-division multiplexing (where multiple users transmit different data on the same frequency domain resource) becomes possible. Transmission data in a space-division multiplexing manner can greatly improve the cell spectral efficiency, thereby improving the cell throughput. In a space-division multiplexing group, each antenna channel corresponds to a different precoding weight, and the transmit power for transmitting data needs to be separately controlled. The merits of the precoding weight and the rationality of the power distribution strategy directly affect the spectral efficiency of the entire multi-user space-division multiplexing group. Furthermore, in the MIMO, the precoding weight obtained through the joint calculation of multi-user space-division multiplexing is usually a non-constant modulus weight. Due to the lack of an effective mechanism at present to comprehensively consider the orthogonality of the weight, the reliability of power distribution is low. If the power distribution is not reasonable, the data transmission performance may also be affected. For example, the interference between the antenna channels is relatively large, and the signal to interference plus noise ratio (SINR) and spectral efficiency of the space-division multiplexing group are low.

CN 110 120 829 A proposes a power control method to reduce the large influence of the magnitude of the weight on the SINR.

"SINR Distribution and Scheduling Gain Analysis of Uplink Channel-Adaptive Scheduling", XP011783046, discloses a stochastic geometry analysis of the SINR distribution and scheduling gain of normalized SNR-based scheduling in an uplink Poisson cellular network, in which the per-user truncated fractional transmit power control is performed.

CN 111 130 606 A relates to a precoding method based on power allocation.

### SUMMARY

Embodiments of the present application provide a data transmission method and apparatus, a communication node and a computer-readable storage medium.

The present application is set out in the appended claims.

### BRIEF DESCRIPTION OF DRAWINGS

FIG. 1 is a flowchart of a data transmission method according to an embodiment of the present application;
FIG. 2 is another flowchart of a data transmission method according to an embodiment of the present application;
FIG. 3 is a structure diagram of a data transmission apparatus according to an embodiment of the present application; and
FIG. 4 is a schematic diagram of a hardware structure of a communication node according to an embodiment of the present application.

### DETAILED DESCRIPTION

The present application is described hereinafter in conjunction with drawings and embodiments. It is to be understood that the embodiments described herein are intended to explain the present application and not to limit the present application. It is to be noted that if not in collision, the embodiments and features therein in the present application may be combined with each other. Additionally, it is to be noted that for ease of description, only part, not all, of structures related to the present application are illustrated in the drawings.

The present application provides a data transmission method and apparatus, a communication node and a storage medium to improve the reliability of power distribution for each antenna channel, thereby improving the data transmission performance.

In the embodiments of the present application, a data transmission method is provided. In such a method, the precoding weight corresponding to each antenna channel may be comprehensively considered and the transmit power of each antenna channel is rationally distributed according to the power control factor and the reference power, power control is performed on each antenna channel, and the data is transmitted on the basis of the above, thereby reducing interference between antenna channels and improving the SINR and spectral efficiency of the space-division multiplexing group.

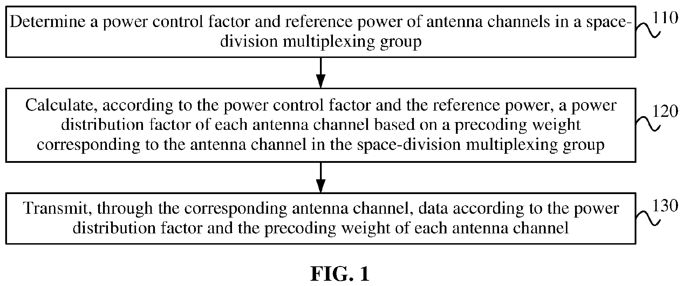

FIG. 1 is a flowchart of a data transmission method according to the only embodiment falling under the scope of appended claim 1 of the present application. The method may be applied to a communication node, and the communication node is a network side, such as a base station. The network side estimates a codebook fed back by a channel matrix H or channel state information (CSI) based on a sounding reference signal (SRS) and divides users satisfying a constraint condition into space-division multiplexing groups based on the constraint of spatial correlation. Multiple space-division multiplexing groups may be formed within one slot, each space-division multiplexing group includes at least one user, and one user refers to one user equipment (UE). For each space-division multiplexing group, the preceding method is used to perform the power distribution on the antenna channels and the data transmission. As shown in FIG. 1, the method provided in this embodiment includes the steps 110 to 130.

In step 110, a power control factor and reference power of antenna channels in a space-division multiplexing group are determined.

In step 120, a power distribution factor of each antenna channel is calculated according to the power control factor and the reference power based on a precoding weight corresponding to each antenna channel in the space-division multiplexing group.

In step 130, data is transmitted according to the power distribution factor and the precoding weight of each antenna channel through a corresponding antenna channel.

In this embodiment, each space-division multiplexing group has the corresponding power control factor and reference power as the basis of the power distribution of each antenna channel in the space-division multiplexing group. The power control factor is related to an integrated SINR of each user in the space-division multiplexing group and the number of space-division layers, and the reference power is related to the inter-carrier power sharing of each user in the space-division multiplexing group, single-resource block (RB) base power and the number of unscheduled (idle) RBs. The power control factor and the reference power may be calculated by a media access control (MAC) layer and transferred to a physical layer, and the physical layer calculates the power distribution factors in conjunction with the precoding weight corresponding to each antenna channel and transmits data based on the distributed power.

In this embodiment, the power control factor is obtained by equalizing the SINR of each user among different space-division layers of the space-division multiplexing group, and the power of each antenna channel may be distributed and controlled based on the reference power. In conjunction with the situation where data is transmitted on each user of the entire space-division multiplexing group through each antenna channel, the transmit power of each antenna channel can be rationally distributed according to the precoding weight corresponding to each antenna channel, and the data is transmitted based on the distributed power, thereby reducing interference between the antenna channels, improving the SINR and spectral efficiency of the space-division multiplexing group, and improving the data transmission performance.

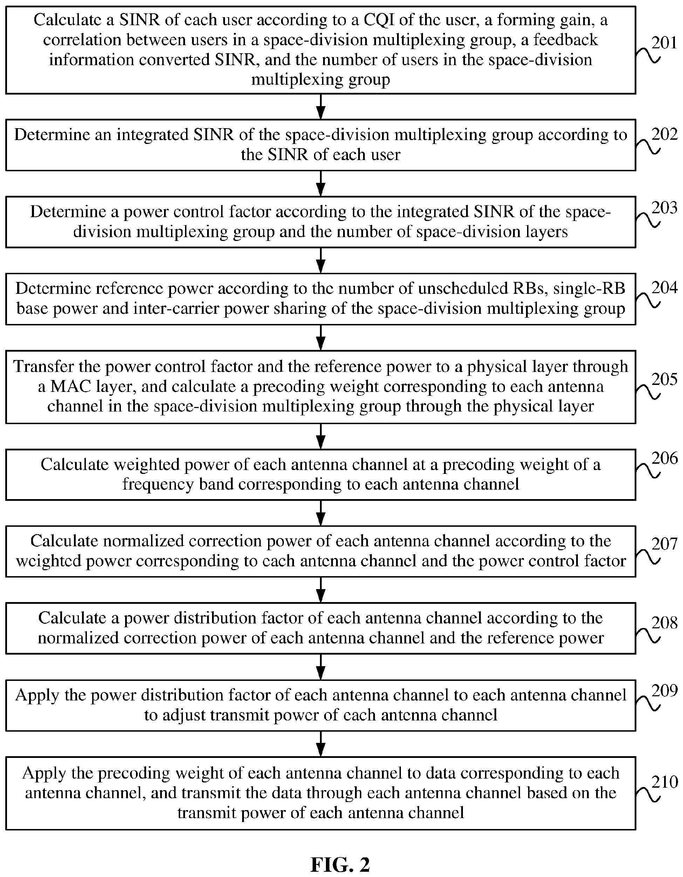

FIG. 2 is another flowchart of a data transmission method according to an embodiment partly falling under the scope of appended claim 1.

This method may be applied to the network side, such as a base station. In this embodiment, the precoding weight of each UE in the space-division multiplexing group is related to the following factors: the magnitude of spatial correlation among users of space-division multiplexing, the magnitude of a channel quality indicator (CQI) of each user in the space-division multiplexing group, the number of users in the space-division multiplexing group, and the magnitude of a beamforming gain of each user in the space-division multiplexing group. In the process of performing the power distribution and data transmission, both the orthogonality (which ensures that the receiving end of a user can eliminate the interference caused by data transmission of other users) between the precoding weight of each user and the channel response of other users and the magnitude (which determines the magnitude of the signal power of the receiving end of the user) of power of each antenna channel of each user at the corresponding precoding weight are taken into account.

As shown in FIG. 2, the method includes steps 201 to 210.

In step 201, an SINR of each user is calculated according to a CQI of each user, a forming gain of each user, a correlation between users in the space-division multiplexing group, a feedback information converted SINR, and the number of users in the space-division multiplexing group. In this embodiment, the space-division multiplexing group includes at least two users, and the power control factor is related to the integrated SINR of each user in the space-division multiplexing group and the number of space-division layers. The integrated SINR of the space-division multiplexing group may be calculated according to the demodulated SINR of each user in the space-division multiplexing group, and the power control factor of the space-division multiplexing group may be calculated according to the number of space-division layers based on the integrated SINR of the space-division multiplexing group. The demodulated SINR of each user in the case of space-division multiplexing is related to the CQI of the user, the forming gain of the precoding weight, the magnitude of the spatial correlation between the user and other users which are in the space-division multiplexing with the user, and the number of users in the space-division multiplexing. The calculation process of the SINR (denoted as *SINR MU* (*UEᵢ*)) of an *i*^{th} UE in the space-division multiplexing group may be expressed as the following: *SINR MU*(*UEᵢ*) *= f*(*CQI*(*UEᵢ*)*, BFgain*(*UEᵢ*), *corrMU*(*UEᵢ*)*, NumMU, deltaSINR*). In the above expression, *f*() represents the function for calculating the SINR of each user, *CGI*(*UEᵢ*) represents the channel quality indicator value of the *i*^{th} UE in the space-division multiplexing group, *BFgain*(*UEᵢ*) represents the forming gain of the *i*^{th} UE in the space-division multiplexing group, *corrMU*(*UEᵢ*) represents the correlation between the *i*^{th} UE and other UEs in the space-division multiplexing group, *NumMU* represents the number of users in the space-division multiplexing group, and *deltaSINR* represents the converted SINR value of an acknowledge character (ACK) and a non-acknowledge character (NACK) fed back by the UE. The specific function of *f*() is not limited to this embodiment.

In step 202, an integrated SINR of the space-division multiplexing group is determined according to the SINR of each user.

In this embodiment, each space-division multiplexing group corresponds to one integrated SINR for preparing power distribution of the antenna channels.

In an embodiment, step 202 includes that the maximum SINR among the SINR of each user is selected as the integrated SINR as according to the embodiment falling under the scope of appended claim 1, or that an average or a weighted average of the SINR of each user is taken as the integrated SINR.

In this embodiment, the integrated SINR of the space-division multiplexing group is determined in the preceding two manners. The first manner falling under the scope of appended claim 1, is based on the maximum SINR principle, that is, for one space-division multiplexing group, the maximum SINR in the space-division multiplexing group is selected as the integrated SINR of the space-division multiplexing group. The second manner is based on the average SINR principle, that is, for one space-division multiplexing group, the average value (or weighted average value) of SINRs of all users in the space-division multiplexing group is calculated to be as the integrated SINR of the space-division multiplexing group. The integrated SINR of the space-division multiplexing group is denoted as *SINR intraGrp.*

In step 203, the power control factor is determined according to the integrated SINR of the space-division multiplexing group and the number of space-division layers.

In this embodiment falling under the scope of appended claim 1, for each space-division multiplexing group, the power control factor (denoted as *Pf_Ant(k MU*)) of the space-division multiplexing group is calculated based on the integrated SINR and the number of space-division layers, and the calculation process may be expressed as the following: *Pf_Ant*(*k_MU*) *= g*(*SINR_intraGrp, LayerMax_intraGrp*)*,* where *g*() represents the function for calculating the power control factor of antenna channels, and *LayerMax_intraGrp* represents the number of space-division layers. The specific function of *g*() is not limited to this embodiment.

In an embodiment, the space-division multiplexing group includes an aligned space-division multiplexing group or a non-aligned space-division multiplexing group, and the number of space-division layers is the maximum number of space-division layers of the space-division multiplexing group in the frequency domain.

In this embodiment, the space-division multiplexing group includes an aligned space-division multiplexing group and a non-aligned space-division multiplexing group, where the aligned space-division multiplexing group spatially divides one user for each frequency-domain layer, and the non-aligned space-division multiplexing group may spatially divide multiple users for each frequency-domain layer. The number of space-division layers of the space-division multiplexing group is the maximum number of space-division layers in the frequency domain and is denoted as *LayerMax_intraGrp.*

In step 204, the reference power is determined according to the number of unscheduled RBs, the single-RB base power, and inter-carrier power sharing of the space-division multiplexing group. In this embodiment, the single-RB base power (denoted as *Power_AAU*) of each antenna channel is determinate (the single-RB base power of an active antenna unit (AAU) of different equipment manufacturers is slightly different), and the reference power (denoted as *Phase_Ant*(*k_MU*)) of the space-division multiplexing group is calculated based on the inter-carrier power sharing (denoted as *Powershare*) and the number of unscheduled RBs (denoted as *RBrestNum*), which may be specifically expressed as the following: $Pbase _ Ant = h \left(Power_AAU,Powershare,RBrestNum\right) ,$ where *h*() represents the function for calculating the reference power. The specific function of *h*() is not limited to this embodiment.

In step 205, the power control factor and the reference power are transferred to a physical layer through a MAC layer, and a precoding weight corresponding to each antenna channel in the space-division multiplexing group is calculated through the physical layer.

In this embodiment, the MAC layer transfers *Pf_Ant*(*k_MU*) and *Phase_Ant*(*k_MU*) which are obtained by calculation and correspond to each space-division multiplexing group to the physical layer, and for each space-division multiplexing group, the physical layer calculates the precoding weight of each antenna channel in the space-division multiplexing group on the corresponding frequency band corresponding based on the precoding scheme.

In step 206, weighted power of each antenna channel at the precoding weight of the frequency band corresponding to each antenna channel is calculated, as defined in appended claim 1.

In this embodiment, for each space-division multiplexing group, the power of each antenna channel corresponding to the precoding weight within an occupied frequency-domain bandwidth is calculated. For example, a k_MU^{th} space-division multiplexing group has *M* UEs, and the total number of antenna channels is N, for a *ka*^{th} antenna channel, the precoding weight on a *j*^{th} UE is *wⱼ,* and the power of the *ka*^{th} antenna channel at the precoding weight of a frequency band corresponding to the *ka*^{th} antenna channel is denoted as *E*(*ka, k_MU*)*,* which may be expressed as $E \left(ka,k_MU\right) = {\sum }_{j = 1}^{M} {\left|{w}_{j}\right|}^{2}$.

In step 207, normalized correction power of each antenna channel is calculated according to the weighted power corresponding to each antenna channel and the power control factor.

According to the present invention, the normalized correction power is mainly calculated by normalizing antenna channel power to a single RB in conjunction with the power control factor of the space-division multiplexing group, so as to control the difference between the weighted power of each antenna channel and the maximum power.

In step 208, according to the present invention, the power distribution factor of each antenna channel is calculated according to the normalized correction power of each antenna channel and the reference power.

In this embodiment, the power distribution factor of each antenna channel in each space-division multiplexing group may be obtained by loop calculation.

In step 209, the power distribution factor of each antenna channel is applied to the corresponding antenna channel to adjust the transmit power of the corresponding antenna channel.

In this embodiment, the calculated power distribution factor of each antenna channel in each space-division multiplexing group is applied to an antenna channel corresponding to the precoding weights of all space-division users of an RB corresponding to the space-division multiplexing group to control the transmit power of the corresponding antenna channel.

In step 210, the precoding weight of each antenna channel is applied to data corresponding to the antenna channel, and the data is transmitted through each antenna channel based on the corresponding transmit power of the antenna channel.

In this embodiment, the precoding weight used for enabling the power distribution factor is applied to data and a demodulation reference signal (DMRS), and the data and DMRS are mapped to a corresponding antenna channel together and transmitted using the corresponding transmit power.

In the embodiment falling under the scope of appended claim 1, step 207 includes that the maximum power value in the weighted power corresponding to each antenna channel is determined, a difference between the maximum power value and the weighted power corresponding to each antenna channel is calculated, and the normalized correction power of each antenna channel is calculated according to the difference of each antenna channel, the power control factor, the weighted power corresponding to each antenna channel, and the number of scheduled RBs.

In this embodiment, the calculation process of the normalized correction power is as follows: the maximum power value among the weighted power of each antenna channel in the space-division multiplexing group is selected and denoted as *E*ₘₐₓ(*k*_*MU*); the difference between the weighted power of each antenna channel and the maximum power value is calculated, where the difference between the maximum power value and the weighted power of the *ka*^{th} antenna channel in the *k*^{th} space division multiplexing group is denoted as Δ*E_{BF}*(*ka,k_MU*), and the calculation process may be expressed as the following: $Δ {E}_{BF} \left(ka,k_MU\right) = {E}_{max} \left(k_MU\right) - E \left(ka,k_MU\right) ,$ where *ka* = 0,1,...*N*; then the normalized correction power of each antenna channel is calculated, the normalized correction power is associated with the difference between the weighted power and the maximum power value, the weighted power, the power control factor, and the number of scheduled RBs, and the normalized correction power is obtained mainly by normalizing the weighted power of each antenna channel to a single RB in conjunction with the power control factor of the space-division multiplexing group, so as to control the difference between the maximum power and the weighted power of each antenna channel.

In an embodiment, the normalized correction power of each antenna channel is: $\overline{E} \left(ka,k_MU\right) = \frac{E \left(ka,k_MU\right)}{RBNum \left(k_MU\right)} + Pf _ Ant \left(k_MU\right) \frac{Δ {E}_{BF} \left(ka,k_MU\right)}{RBNum \left(k_MU\right)} + ε .$

In the above expression, E̅(*ka,k_MU*) is the normalized correction power of the *ka*^{th} antenna channel of the space-division multiplexing group *k,* E(*ka*,*k*_*MU*) is the weighted power of the *ka*^{th} antenna channel of the space-division multiplexing group *k* at the precoding weight of a frequency band corresponding to the *ka*^{th} antenna channel, *RBNum*(*k_MU*) is the number of scheduled RBs of the space-division multiplexing group *k, Pf_Ant*(*k_MU*) is the power control factor of the space-division multiplexing group *k,* Δ*E_{BF}*(*ka,k*_*MU*) is the difference between the maximum power value and the weighted power of the *ka*^{th} antenna channel of the space-division multiplexing group *k*, and ε is a power additive adjustment amount.

In an embodiment, the power distribution factor of each antenna channel is: $ρ \left(ka,k_MU\right) = \sqrt{Pbase _ Ant \left(k_MU\right) / \overline{E} \left(ka,k_MU\right)} ;$ where *p*(*ka,k_MU*) is the power distribution factor of the *ka*^{th} antenna channel of the space-division multiplexing group *k, Phase_Ant* (*k_MU*) is the reference power of the space-division multiplexing group *k,* and E̅(*ka,k_MU*) is the normalized correction power of the space-division multiplexing group *k.*

The process of power distribution and data transmission is described below through an example.

It is assumed that the MAC layer forms two space-division multiplexing groups based on scheduled users under the condition that the space-division multiplexing is satisfied. The first space-division multiplexing group includes two users, and the second space-division multiplexing group includes four users. The demodulated SINR corresponding to each user in each space-division multiplexing group is {10, 20} dB and {15, 12, 18, 25} dB, respectively. The first space-division multiplexing group schedules 52 RBs, and the second space-division multiplexing group schedules 48 RBs.

In step 1, an integrated SINR for each space-division multiplexing group is determined.

For example, based on the average SINR principle, the integrated SINR of the first space-division multiplexing group is that *SINR_intraGrp*(1) = (10 + 20)/2 = 15 dB, and the integrated SINR of the second space-division multiplexing group is that *SINR_intraGrp*(2) = (15 + 12 + 18 + 25)/4 = 17.5 dB.

In step 2, the number of space-division layers of each space-division multiplexing group is determined.

For example, *LayerMax_intraGrp*(1) of the first space-division multiplexing group is 2, and *LayerMax intraGrp(2)* of the second space-division multiplexing group is 4.

In step 3, the power control factor of each space-division multiplexing group is calculated. The power control factor of a *k*^{th} space-division multiplexing group is $\begin{matrix}Pf _ Ant \left(k_MU\right) = g \left(SINR_intraGrp, LayerMax_intraGrp\right) \\ = \left\{\begin{matrix}0 , & LayerMax _ int raGrp ⋅ {log}_{2} \left(1+SINR_intraGrp\right) < Thr 1 \\ 0.1 , & Thr 1 < LayerMax _ int raGrp ⋅ {log}_{2} \left(1+SINR_intraGrp\right) \leq Thr 2 \\ 0.2 , & Thr 2 < LayerMax _ int raGrp ⋅ {log}_{2} \left(1+SINR_intraGrp\right) \leq Thr 3 \\ ⋮ & \\ 1 , & Thr 10 < LayerMax _ int raGrp ⋅ {log}_{2} \left(1+SINR_intraGrp\right) \leq Thr 11\end{matrix}\right. .\end{matrix}$

In the above expression, *g*() may be designed as a piecewise function and corresponds to 11 thresholds (*Thr*1 to *Thr*11), and these thresholds may be obtained by simulation or testing.

The power control factor of each space-division multiplexing group is obtained based on the integrated SINR and the number of space-division layers of each space-division multiplexing group, that is, *Pf_Ant*(1) = 0.1, and *Pf_Ant*(2) = 0.4.

In step 4, the reference power of each space-division multiplexing group is calculated.

For example, the single-RB base power of each antenna channel is set to 1, and the inter-carrier power sharing and the case of non-full scheduling (the number of unscheduled RBs is 0) are not taken into consideration, so *Phase_Ant*(1) = 1, and *Phase_Ant*(2) = 1*.*

In step 5, the MAC layer transfers the following parameters to the physical layer: $Pf _ Ant \left(1\right) = 0.1 , Pf _ Ant \left(2\right) = 0.4 , Pbase _ Ant \left(1\right) = 1 , and Pbase _ Ant \left(2\right) = 1 .$

In step 6, the physical layer calculates the power distribution factor of each antenna channel, and the specific process includes 1), 2), 3) and 4).
1) The precoding weight corresponding to each antenna channel is calculated.
2) The weighted power of each antenna channel at the precoding weight of a frequency band corresponding to each antenna channel is calculated.
3) The normalized correction power is calculated according to the weighted power corresponding to each antenna channel.
   The normalized correction power is mainly about normalizing the weighted power of each antenna channel to a single RB in conjunction with the power control factor (which mainly controls the difference between the weighted power and the maximum power) of the space-division multiplexing group, and the calculation of the normalized correction power is as follows:
   the normalized correction power of the first space-division multiplexing group is $\overline{E} \left(ka, 1\right) = \frac{E \left(ka, 1\right)}{52} + 0.1 \frac{Δ {E}_{BF} \left(ka, 1\right)}{52}$; and
   the normalized correction power of the second space-division multiplexing group is $\overline{E} \left(ka, 2\right) = \frac{E \left(ka, 2\right)}{48} + 0.4 \frac{Δ {E}_{BF} \left(ka, 2\right)}{48}$;
   where the power additive adjustment amount *ε* is set to 0.
4) The power distribution factor of each antenna channel is calculated, the power distribution factor of the *ka*^{th} antenna channel of the first space-division multiplexing group is $ρ \left(ka, 1\right) = \sqrt{1 / \overline{E} \left(ka, 1\right)}$*,* and the power distribution factor of the *ka*^{th} antenna channel of the second space-division multiplexing group is $ρ \left(ka, 2\right) = \sqrt{1 / \overline{E} \left(ka, 2\right)}$*.*

In step 7, the weighted power is enabled according to the power distribution factor. That is, two groups of antenna power distribution factors are acted on the antenna channels corresponding to the precoding weights of all space-division users corresponding to RBs of the two space-division multiplexing groups, respectively.

In step 8, the precoding weight enabling the power distribution factor is applied to data and a DMRS, and the data and DMRS are mapped together to an antenna channel for transmission.

The data transmission method provided in this embodiment is applicable to the case of adaptive power distribution of antenna channels in the MIMO system for multi-user space-division multiplexing and is mainly applicable to the large-scale MIMO system. The method has strong engineering feasibility and considers the integrated SINR and the demodulated SINR of each user in the space-division multiplexing group, the power control factor is obtained by balancing the SINR of each user at different space-division layers in the space-division multiplexing group, the normalized correction power is obtained by controlling the difference between the maximum power and the weighted power of each antenna channel, the power distribution factor is obtained with reference to the reference power, and on the basis of the above, power distribution and control are performed in conjunction with the precoding weight, so that the space-division users can obtain a better traffic gain in different channel conditions, thereby improving the SINR and the spectral efficiency.

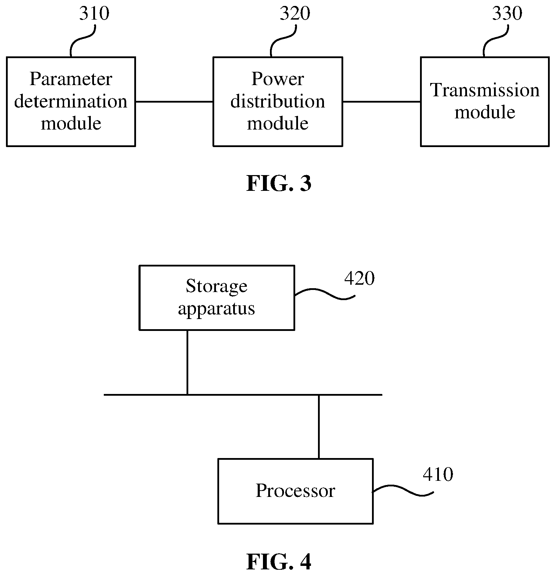

An embodiment of the present application further provides a data transmission apparatus. FIG. 3 is a structure diagram of a data transmission apparatus according to an embodiment of the present application. As shown in FIG. 3, the data transmission apparatus includes a parameter determination module 310, a power distribution module 320, and a transmission module 330.

The parameter determination module 310 is configured to determine a power control factor and reference power of antenna channels in a space-division multiplexing group.

The power distribution module 320 is configured to calculate, according to the power control factor and the reference power, a power distribution factor of each antenna channel based on a precoding weight corresponding to the antenna channel in the space-division multiplexing group.

The transmission module 330 is configured to transmit, according to the power distribution factor and the precoding weight of each antenna channel, data through the corresponding antenna channel.

Through the data transmission apparatus provided in this embodiment, in conjunction with the precoding weight corresponding to each antenna channel, transmit power of each antenna channel is rationally distributed according to the power control factor and the reference power, power control is performed on each antenna channel, and the data is transmitted on the basis of the above, thereby reducing interference between antenna channels and improving the SINR and spectral efficiency of the space-division multiplexing group.

In an embodiment, the parameter determination module 310 includes a power control factor determination unit configured to determine the power control factor according to an integrated SINR of the space-division multiplexing group and the number of space-division layers.

In an embodiment, the parameter determination module 310 includes a reference power determination unit configured to determine the reference power according to the number of unscheduled RBs, single-RB base power and inter-carrier power sharing of the space-division multiplexing group.

In an embodiment, the space-division multiplexing group includes at least two users.

The apparatus further includes an integrated SINR calculation module configured to, before the power control factor of antenna channels in the space-division multiplexing group is determined, calculate an SINR of each user according to a CQI of each user, a forming gain of each user, a correlation between users in the space-division multiplexing group, a feedback information converted SINR, and the number of users in the space-division multiplexing group, and determine the integrated SINR of the space-division multiplexing group according to the SINR of each user.

In an embodiment, the step in which the integrated SINR of the space-division multiplexing group is determined according to the SINR of each user includes that the maximum SINR among the SINR of each user is selected as the integrated SINR or that an average or a weighted average of the SINR of each user is taken as the integrated SINR.

In an embodiment, the space-division multiplexing group includes an aligned space-division multiplexing group or a non-aligned space-division multiplexing group.

The number of space-division layers is the maximum number of space-division layers of the space-division multiplexing group in the frequency domain.

In an embodiment, the power distribution module 320 includes a weighted power calculation unit configured to calculate weighted power of each antenna channel at a precoding weight of a frequency band corresponding to each antenna channel; a normalized correction unit configured to calculate normalized correction power of each antenna channel according to the weighted power corresponding to each antenna channel and the power control factor; and a power distribution unit configured to calculate the power distribution factor of each antenna channel according to the normalized correction power of each antenna channel and the reference power.

In an embodiment, the normalized correction unit is configured to determine the maximum power value among the weighted power corresponding to each antenna channel, calculate a difference between the maximum power value and the weighted power corresponding to each antenna channel, and calculate the normalized correction power of each antenna channel according to the difference of the respective antenna channel, the power control factor, the weighted power corresponding to the respective antenna channel, and the number of scheduled RBs.

In an embodiment, the normalized correction power of each antenna channel is: $\overline{E} \left(ka,k_MU\right) = \frac{E \left(ka,k_MU\right)}{RBNum \left(k_MU\right)} + Pf _ Ant \left(k_MU\right) \frac{Δ {E}_{BF} \left(ka,k_MU\right)}{RBNum \left(k_MU\right)} + ε .$

In the above expression, E̅(*ka,k_MU*) is the normalized correction power of a *ka*^{th} antenna channel of a space-division multiplexing group *k,* E(*ka*,*k*_*MU*) is the weighted power of the *ka*^{th} antenna channel of the space-division multiplexing group *k* at a precoding weight of a frequency band corresponding to the *ka*^{th} antenna channel, *RBNum*(*k_MU*) is the number of scheduled RBs of the space-division multiplexing group *k, Pf_Ant*(*k_MU*) is the power control factor of the space-division multiplexing group *k,* Δ*E_{BF}*(*ka,k_MU*) is the difference between the maximum power value and the weighted power of the *ka*^{th} antenna channel of the space-division multiplexing group *k*, and *ε* is a power additive adjustment amount.

In an embodiment, the power distribution factor of each antenna channel is: $ρ \left(ka,k_MU\right) = \sqrt{Pbase _ Ant / \overline{E} \left(ka,k_MU\right)} .$

In the above expression, *ρ*(*ka,k_MU*) is the power distribution factor of the *ka*^{th} antenna channel of the space-division multiplexing group *k, Phase_Ant* is the reference power of the space-division multiplexing group *k,* and E̅(*ka*,*k_MU*) is the normalized correction power of the space-division multiplexing group *k.*

In an embodiment, the apparatus further includes a weight calculation module configured to, after the power control factor and the reference power of antenna channels in the space-division multiplexing group are determined, transfer the power control factor and the reference power to a physical layer through a MAC layer and calculate a precoding weight corresponding to each antenna channel in the space-division multiplexing group through the physical layer.

In an embodiment, the transmission module 330 is configured to apply the power distribution factor of each antenna channel to each antenna channel to adjust transmit power of each antenna channel, apply the precoding weight of each antenna channel to data corresponding to each antenna channel, and transmit data through each antenna channel based on the transmit power of the corresponding antenna channel.

The data transmission apparatus provided in this embodiment and the data transmission method provided in the preceding embodiments belong to the same concept. For technical details not described in detail in this embodiment, reference may be made to any one of the preceding embodiments, and this embodiment has the same beneficial effects as the executed data transmission method.

An embodiment of the present application further provides a communication node. The data transmission method may be performed by a data transmission apparatus, and the data transmission apparatus may be implemented by software and/or hardware and integrated into the communication node. The communication node is the network side, such as a base station.

FIG. 4 is a schematic diagram of a hardware structure of a communication node according to an embodiment of the present application. As shown in FIG. 4, the communication node provided in this embodiment includes a processor 410 and a storage apparatus 420. The communication node may include one or more processors, and one processor 410 is illustrated as an example in FIG. 4. The processor 410 and the storage apparatus 420 in the device may be connected via a bus or in other manners, and the connection via the bus is illustrated as an example in FIG. 4.

One or more programs are executed by the one or more processors 410 to cause the one or more processors to perform the data transmission method in any one of the preceding embodiments.

As a computer-readable storage medium, the storage apparatus 420 in the communication node may be configured to store one or more programs, the one or more programs may be software programs, computer-executable programs and modules, such as program instructions/modules (for example, modules in the data transmission apparatus shown in FIG. 3, including the parameter determination module 310, the power distribution module 320, and the transmission module 330) corresponding to the data transmission method in the embodiments of the present application. The processor 410 executes software programs, instructions, and modules stored in the storage apparatus 420 to perform various function applications and data processing of the communication node, that is, to implement the data transmission method in the preceding method embodiments.

The storage apparatus 420 mainly includes a program storage region and a data storage region. The program storage region may store an operating system and an application program required by at least one function. The data storage region may store data (such as the power control factor and reference power in the preceding embodiments) created based on the use of the device. Additionally, the storage apparatus 420 may include a high-speed random-access memory and may also include a non-volatile memory such as at least one disk memory, a flash memory device or another volatile solid-state memory. In some examples, the storage apparatus 420 may further include memories which are remotely disposed with respect to the processor 410. These remote memories may be connected to the communication node via a network. Examples of the preceding network include, but are not limited to, the Internet, an intranet, a local area network, a mobile communication network, and a combination thereof.

The one or more programs included in the preceding communication node, when executed by the one or more processors 410, perform the following operations: determining a power control factor and reference power of antenna channels in a space-division multiplexing group; calculating, according to the power control factor and the reference power, a power distribution factor of each antenna channel based on a precoding weight corresponding to each antenna channel in the space-division multiplexing group; and transmitting, according to the power distribution factor and the precoding weight of each antenna channel, data through the corresponding antenna channel.

The communication node provided in this embodiment and the data transmission method provided in the preceding embodiments belong to the same concept. For technical details not described in detail in this embodiment, reference may be made to any one of the preceding embodiments, and this embodiment has the same beneficial effects as the executed data transmission method.

An embodiment of the present application further provides a storage medium including computer-executable instructions, where the computer-executable instructions are configured to, when executed by a computer processor, perform the data transmission method. The method includes the following: a power control factor and reference power of antenna channels in a space-division multiplexing group are determined; a power distribution factor of each antenna channel is calculated according to the power control factor and the reference power based on a precoding weight corresponding to each antenna channel in the space-division multiplexing group; and data is transmitted according to the power distribution factor and the precoding weight of each antenna channel through the corresponding antenna channel.

From the preceding description of embodiments, it is apparent to those skilled in the art that the present application may be implemented by software and general-purpose hardware or may be implemented by hardware. Based on this understanding, the technical solutions of the present application may be embodied in the form of a software product. The computer software product may be stored in a computer-readable storage medium such as a floppy disk, a read-only memory (ROM), a random-access memory (RAM), a flash memory, a hard disk, or an optical disk of a computer and includes multiple instructions for causing a computer device (which may be a personal computer, a server, or a network device) to perform the method in any one of the embodiments of the present application.

The preceding are exemplary embodiments of the present application and are not intended to limit the scope of the present application.

A block diagram of any logic flow among the drawings of the present application may represent program steps, interconnected logic circuits, modules and functions, or a combination of program steps and logic circuits, modules and functions. The computer program may be stored in a memory. The memory may be in any type suitable for the local technical environment and may be implemented using any suitable data storage technology, for example, but not limited to, a read-only memory (ROM), a random-access memory (RAM), and an optical memory apparatus and system (a digital versatile disc (DVD) or a compact disc (CD)). The computer-readable media may include a non-transitory storage medium. The data processor may be of any type suitable to the local technical environment such as, but not limited to, a general-purpose computer, a special-purpose computer, a microprocessor, digital signal processing (DSP), an application-specific integrated circuit (ASIC), a field-programmable gate array (FPGA) and a processor based on a multi-core processor architecture.

## Claims

1. A data transmission method, comprising:
determining a power control factor of antenna channels in a space-division multiplexing group by equalizing a signal to interference plus noise ratio, SINR, of each user among different space-division layers of the space-division multiplexing group;
determining (204) reference power of the antenna channels in the space-division multiplexing group according to a number of unscheduled resource blocks, RBs, single-RB base power, and inter-carrier power sharing of the space-division multiplexing group;
calculating (206) weighted power of each of the antenna channels at a precoding weight of a frequency band corresponding to each of the antenna channels;
determining a maximum power value in the weighted power corresponding to each of the antenna channels, calculating a difference between the maximum power value and the weighted power corresponding to each of the antenna channels, and calculating a normalized correction power of each of the antenna channels according to the difference of each of the antenna channels, the power control factor, the weighted power corresponding to each of the antenna channels, and a number of scheduled RBs;
calculating (208) a power distribution factor of each of the antenna channels according to the reference power and the normalized correction power of the each of the antenna channels; and
transmitting (130), according to the power distribution factor and the precoding weight of each of the antenna channels, data through a respective antenna channel.

2. The method of claim 1, wherein the space-division multiplexing group comprises at least two users; and
before determining the power control factor of the antenna channels in the space-division multiplexing group, the method further comprises:
calculating (201) the SINR of each of the at least two users according to a channel quality indicator, CQI, of the each of the at least two users, a forming gain of the each of the at least two users, a correlation of the at least two users in the space-division multiplexing group, a feedback information converted SINR, and a number of users in the space-division multiplexing group; and
determining (202) the integrated SINR of the space-division multiplexing group according to the SINR of each of the at least two users.

3. The method of claim 2, wherein determining (202) the integrated SINR of the space-division multiplexing group according to the SINR of each of the at least two users comprises:
selecting a maximum SINR in the SINR of each of the at least two users as the integrated SINR; or
taking an average or a weighted average of the SINR of each of the at least two users as the integrated SINR.

4. The method of claim 1, wherein the space-division multiplexing group comprises an aligned space-division multiplexing group or a non-aligned space-division multiplexing group; and
the number of space-division layers is a maximum number of space-division layers of the space-division multiplexing group in a frequency domain.

5. The method of claim 1, wherein the normalized correction power of each of the antenna channels is calculated based on the following formula: $\overline{E} \left(ka,k_MU\right) = \frac{E \left(ka,k_MU\right)}{RBNum \left(k_MU\right)} + Pf _ Ant \left(k_MU\right) \frac{Δ {E}_{BF} \left(ka,k_MU\right)}{RBNum \left(k_MU\right)} + ε ,$ wherein E̅(*ka,k_MU*) is normalized correction power of a *ka*^{th} antenna channel in a space-division multiplexing group *k,* E(*ka*,*k*_*MU*) is weighted power of the *ka*^{th} antenna channel in the space-division multiplexing group *k* at a precoding weight of a frequency band corresponding to the *ka*^{th} antenna channel, *RBNum*(*k_MU*) is a number of scheduled RBs of the space-division multiplexing group *k, Pf_Ant*(*k_MU*) is the power control factor of the space-division multiplexing group *k,* Δ*E_{BF}*(*ka,k_MU*) is a difference between the maximum power value and the weighted power of the *ka*^{th} antenna channel in the space-division multiplexing group *k*, and ε is a power additive adjustment amount.

6. The method of claim 1, wherein the power distribution factor of each of the antenna channels is calculated based on the following formula: $ρ \left(ka,k_MU\right) = \sqrt{Pbase _ Ant / \overline{E} \left(ka,k_MU\right)} ;$ wherein *ρ*(*ka,k_MU*) is a power distribution factor of a *ka*^{th} antenna channel in a space-division multiplexing group *k, Pbase_Ant* is the reference power of the space-division multiplexing group *k,* and E̅(*ka,k_MU*) is the normalized correction power of the space-division multiplexing group *k.*

7. The method of any one of claims 1 to 6, after determining (110) the power control factor and the reference power of the antenna channels in the space-division multiplexing group, further comprising:
transferring (205) the power control factor and the reference power to a physical layer through a media access control, MAC, layer; and
calculating the precoding weight corresponding to each of the antenna channels in the space-division multiplexing group through the physical layer.

8. The method of any one of claims 1 to 7, wherein transmitting (130), according to the power distribution factor and the precoding weight of each of the antenna channels, the data through the respective antenna channel comprises:
applying (209) the power distribution factor of each of the antenna channels to the each of the antenna channels to adjust transmit power of the each of the antenna channels;
applying (210) the precoding weight of each of the antenna channels to data corresponding to the each of the antenna channels, and transmitting the data through the each of the antenna channels based on the transmit power of the each of the antenna channels.

9. A data transmission apparatus, comprising:
a parameter determination module (310), which is configured to determine a power control factor of antenna channels in a space-division multiplexing group by equalizing a signal to interference plus noise ratio, SINR, of each user among different space-division layers of the space-division multiplexing group, and determine reference power of the antenna channels in the space-division multiplexing group according to a number of unscheduled resource blocks, RBs, single-RB base power, and inter-carrier power sharing of the space-division multiplexing group;
a power distribution module (320), which is configured to: calculate weighted power of each of the antenna channels at a precoding weight of a frequency band corresponding to the each of the antenna channels; determine a maximum power value in the weighted power corresponding to each of the antenna channels, calculate a difference between the maximum power value and the weighted power corresponding to each of the antenna channels, and calculate a normalized correction power of each of the antenna channels according to the difference of each of the antenna channels, the power control factor, the weighted power corresponding to each of the antenna channels, and a number of scheduled RBs; and calculate a power distribution factor of each of the antenna channels according to the reference power and the normalized correction power of the each of the antenna channels; and
a transmission module (330), which is configured to transmit, according to the power distribution factor and the precoding weight of each of the antenna channels, data through a respective antenna channel.

10. A communication node, comprising:
one or more processors (410); and
a storage apparatus (420), which is configured to store one or more programs;
wherein the one or more programs, when executed by the one or more processors (410), cause the one or more processors (410) to perform the data transmission method of any one of claims 1 to 8.

11. A computer-readable storage medium storing a computer program, wherein the program, when executed by a processor, performs the data transmission method of any one of claims 1 to 8.

## Patentansprüche

1. Datenübertragungsverfahren, umfassend:
Bestimmen eines Leistungssteuerungsfaktors für Antennenkanäle in einer Raummultiplexgruppe durch Angleichen eines Signal-Interferenz-plus-Rausch-Verhältnisses, SINR, jedes Benutzers zwischen unterschiedlichen Raummultiplexschichten der Raummultiplexgruppe;
Bestimmen (204) einer Referenzleistung der Antennenkanäle in der Raummultiplexgruppe gemäß einer Anzahl von nicht geplanten Ressourcenblöcken, RB, der Basisleistung eines einzelnen RB und der gemeinsamen Leistungsnutzung zwischen Trägern der Raummultiplexgruppe;
Berechnen (206) einer gewichteten Leistung jedes der Antennenkanäle bei einer Vorcodierungsgewichtung eines Frequenzbands, das jedem der Antennenkanäle entspricht;
Bestimmen eines maximalen Leistungswerts in der gewichteten Leistung, die jedem der Antennenkanäle entspricht, Berechnen einer Differenz zwischen dem maximalen Leistungswert und der gewichteten Leistung, die jedem der Antennenkanäle entspricht, und Berechnen einer normalisierten Korrekturleistung jedes der Antennenkanäle gemäß der Differenz jedes der Antennenkanäle, dem Leistungssteuerungsfaktor, der gewichteten Leistung, die jedem der Antennenkanäle entspricht, und einer Anzahl von geplanten RB;
Berechnen (208) eines Leistungsverteilungsfaktors jedes der Antennenkanäle gemäß der Referenzleistung und der normalisierten Korrekturleistung des jeden der Antennenkanäle; und
Übertragen (130) von Daten über einen jeweiligen Antennenkanal gemäß dem Leistungsverteilungsfaktor und der Vorcodierungsgewichtung jedes der Antennenkanäle.

2. Verfahren nach Anspruch 1, wobei die Raummultiplexgruppe mindestens zwei Benutzer umfasst; und
das Verfahren vor dem Bestimmen des Leistungssteuerungsfaktors der Antennenkanäle in der Raummultiplexgruppe ferner Folgendes umfasst:
Berechnen (201) des SINR jedes der mindestens zwei Benutzer gemäß einem Kanalqualitätsindikator, CQI, des jeden der mindestens zwei Benutzer, einem Formungsgewinn des jeden der mindestens zwei Benutzer, einer Korrelation der mindestens zwei Benutzer in der Raummultiplexgruppe, eines rückkopplungsinformationskonvertierten SINR und einer Anzahl von Benutzern in der Raummultiplexgruppe; und
Bestimmen (202) des integrierten SINR der Raummultiplexgruppe gemäß dem SINR jedes der mindestens zwei Benutzer.

3. Verfahren nach Anspruch 2, wobei das Bestimmen (202) des integrierten SINR der Raummultiplexgruppe gemäß dem SINR jedes der mindestens zwei Benutzer Folgendes umfasst:
Auswählen des maximalen SINR in dem SINR jedes der mindestens zwei Benutzer als das integrierte SINR; oder
Heranziehen eines Durchschnitts oder eines gewichteten Durchschnitts des SINR jedes der mindestens zwei Benutzer als das integrierte SINR.

4. Verfahren nach Anspruch 1, wobei die Raummultiplexgruppe eine ausgerichtete Raummultiplexgruppe oder eine nicht ausgerichtete Raummultiplexgruppe umfasst; und
die Anzahl von Raummultiplexschichten die maximale Anzahl an Raummultiplexschichten der Raummultiplexgruppe in einer Frequenzdomäne ist.

5. Verfahren nach Anspruch 1, wobei die normalisierte Korrekturleistung jedes der Antennenkanäle basierend auf der folgenden Formel berechnet wird: $\overline{E} \left(ka,k_MU\right) = \frac{E \left(ka,k_MU\right)}{RBNum \left(k_MU\right)} + Pf _ Ant \left(k_MU\right) \frac{Δ {E}_{BF} \left(ka,k_MU\right)}{RBNum \left(k_MU\right)} + ε ,$ wobei E̅(*ka,k_MU*) die normalisierte Korrekturleistung eines *ka*^{ten} Antennenkanals in einer Raummultiplexgruppe *k* ist, *E(ka,k_MU)* die gewichtete Leistung des *ka*^{ten} Antennenkanals in der Raummultiplexgruppe *k* bei einer Vorcodierungsgewichtung eines Frequenzbands ist, das dem *ka*^{ten} Antennenkanal entspricht, *RBNum*(*k*_*MU*) eine Anzahl von geplanten RB der Raummultiplexgruppe *k* ist, *Pf_Ant*(*k_MU*) der Leistungssteuerungsfaktor der Raummultiplexgruppe *k* ist, Δ*E_{BF}*(*ka,k*_*MU*) eine Differenz zwischen dem maximalen Leistungswert und der gewichteten Leistung des *ka*^{ten} Antennenkanals in der Raummultiplexgruppe *k* ist und *ε* ein Betrag für die additive Anpassung der Leistung ist.

6. Verfahren nach Anspruch 1, wobei der Leistungsverteilungsfaktor jedes der Antennenkanäle basierend auf der folgenden Formel berechnet wird: $ρ \left(ka,k_MU\right) = \sqrt{Pbase _ Ant / \overline{E} \left(ka,k_MU\right)} ;$ wobei *ρ*(*ka,k*_*MU*) ein Leistungsverteilungsfaktor eines *ka*^{ten} Antennenkanals in einer Raummultiplexgruppe *k* ist, *Pbase_Ant* die Referenzleistung der Raummultiplexgruppe *k* ist und E̅(*ka,k_MU*) die normalisierte Korrekturleistung der Raummultiplexgruppe *k* ist.

7. Verfahren nach einem der Ansprüche 1 bis 6, das nach dem Bestimmen (110) des Leistungssteuerungsfaktors und der Referenzleistung der Antennenkanäle in der Raummultiplexgruppe ferner Folgendes umfasst:
Übertragen (205) des Leistungssteuerungsfaktors und der Referenzleistung an eine physikalische Schicht über eine Medienzugriffssteuerungsschicht (MAC-Schicht); und
Berechnen der Vorcodierungsgewichtung, die jedem der Antennenkanäle in der Raummultiplexgruppe entspricht, über die physikalische Schicht.

8. Verfahren nach einem der Ansprüche 1 bis 7, wobei das Übertragen (130) der Daten über den jeweiligen Antennenkanal gemäß dem Leistungsverteilungsfaktor und der Vorcodierungsgewichtung jedes der Antennenkanäle Folgendes umfasst:
Anwenden (209) des Leistungsverteilungsfaktors jedes der Antennenkanäle auf den jeden der Antennenkanäle zum Anpassen der Übertragungsleistung des jeden der Antennenkanäle;
Anwenden (210) der Vorcodierungsgewichtung jedes der Antennenkanäle auf Daten, die dem jeden der Antennenkanälen entsprechen, und Übertragen der Daten über den jeden der Antennenkanäle basierend auf der Übertragungsleistung des jeden der Antennenkanäle.

9. Datenübertragungsvorrichtung, umfassend:
ein Parameterbestimmungsmodul (310), das konfiguriert ist, um einen Leistungssteuerungsfaktor für Antennenkanäle in einer Raummultiplexgruppe durch Angleichen eines Signal-Interferenzplus-Rausch-Verhältnisses, SINR, jedes Benutzers zwischen unterschiedlichen Raummultiplexschichten der Raummultiplexgruppe zu bestimmen, und eine Referenzleistung der Antennenkanäle in der Raummultiplexgruppe gemäß einer Anzahl von nicht geplanten Ressourcenblöcken, RB, der Basisleistung eines einzelnen RB und der gemeinsamen Leistungsnutzung zwischen Trägern der Raummultiplexgruppe zu bestimmen;
ein Leistungsverteilungsmodul (320), das konfiguriert ist, um: eine gewichtete Leistung jedes der Antennenkanäle bei einer Vorcodierungsgewichtung eines Frequenzbands, das dem jeden der Antennenkanäle entspricht, zu berechnen; einen maximalen Leistungswert in der gewichteten Leistung, die jedem der Antennenkanäle entspricht, zu bestimmen; eine Differenz zwischen dem maximalen Leistungswert und der gewichteten Leistung, die jedem der Antennenkanäle entspricht, zu berechnen und eine normalisierte Korrekturleistung jedes der Antennenkanäle gemäß der Differenz jedes der Antennenkanäle, dem Leistungssteuerungsfaktor, der gewichteten Leistung, die jedem der Antennenkanäle entspricht, und einer Anzahl von geplanten RB zu berechnen; und einen Leistungsverteilungsfaktor jedes der Antennenkanäle gemäß der Referenzleistung und der normalisierten Korrekturleistung des jeden der Antennenkanäle zu berechnen; und
ein Übertragungsmodul (330), das konfiguriert ist, um gemäß dem Leistungsverteilungsfaktor und der Vorcodierungsgewichtung jedes der Antennenkanäle Daten über einen jeweiligen Antennenkanal zu übertragen.

10. Kommunikationsknoten, umfassend:
einen oder mehrere Prozessoren (410); und
eine Speichervorrichtung (420), die konfiguriert ist, um ein oder mehrere Programme zu speichern;
wobei das eine oder die mehreren Programme bei Ausführung durch den einen oder die mehreren Prozessoren (410) den einen oder die mehreren Prozessoren (410) dazu veranlassen, das Datenübertragungsverfahren nach einem der Ansprüche 1 bis 8 durchzuführen.

11. Computerlesbares Speichermedium, das ein Computerprogramm speichert, wobei das Programm bei Ausführung durch einen Prozessor das Datenübertragungsverfahren nach einem der Ansprüche 1 bis 8 durchführt.

## Revendications

1. Procédé de transmission de données, comprenant :
détermination d'un facteur de contrôle de puissance de canaux d'antenne dans un groupe de multiplexage spatial en égalisant un rapport signal sur interférence plus bruit, SINR, de chaque utilisateur parmi différentes couches de division spatiale du groupe de multiplexage spatial ;
la détermination (204) de la puissance de référence des canaux d'antenne dans le groupe de multiplexage spatial en fonction d'un nombre de blocs de ressources, RB, non planifiés, de la puissance de base d'un seul RB et du partage de puissance entre porteuses du groupe de multiplexage spatial ;
le calcul (206) de la puissance pondérée de chacun des canaux d'antenne à un poids de précodage d'une bande de fréquence correspondant à chacun des canaux d'antenne ;
la détermination d'une valeur de puissance maximale dans la puissance pondérée correspondant à chacun des canaux d'antenne, le calcul d'une différence entre la valeur de puissance maximale et la puissance pondérée correspondant à chacun des canaux d'antenne et le calcul d'une puissance de correction normalisée de chacun des canaux d'antenne en fonction de la différence de chacun des canaux d'antenne, du facteur de contrôle de puissance, de la puissance pondérée correspondant à chacun des canaux d'antenne et d'un nombre de RB planifiés ;
le calcul (208) d'un facteur de distribution de puissance de chacun des canaux d'antenne en fonction de la puissance de référence et de la puissance de correction normalisée de chacun des canaux d'antenne ; et
la transmission (130), en fonction du facteur de distribution de puissance et du poids de précodage de chacun des canaux d'antenne, de données à travers un canal d'antenne respectif.

2. Procédé selon la revendication 1, dans lequel le groupe de multiplexage spatial comprend au moins deux utilisateurs ; et avant la détermination du facteur de contrôle de puissance des canaux d'antenne dans le groupe de multiplexage spatial, le procédé comprend en outre :
le calcul (201) du SINR de chacun des au moins deux utilisateurs en fonction d'un indicateur de qualité de canal, CQI, de chacun des au moins deux utilisateurs, d'un gain de formation de chacun des au moins deux utilisateurs, d'une corrélation des au moins deux utilisateurs dans le groupe de multiplexage spatial, d'un SINR converti d'informations de rétroaction et d'un nombre d'utilisateurs dans le groupe de multiplexage spatial ; et
la détermination (202) du SINR intégré du groupe de multiplexage spatial en fonction du SINR de chacun des au moins deux utilisateurs.

3. Procédé selon la revendication 2, dans lequel la détermination (202) du SINR intégré du groupe de multiplexage spatial en fonction du SINR de chacun des au moins deux utilisateurs comprend :
la sélection d'un SINR maximal dans le SINR de chacun des au moins deux utilisateurs comme SINR intégré ; ou
le fait de prendre une moyenne ou une moyenne pondérée du SINR de chacun des au moins deux utilisateurs comme SINR intégré.

4. Procédé selon la revendication 1, dans lequel le groupe de multiplexage spatial comprend un groupe de multiplexage spatial aligné ou un groupe de multiplexage spatial non aligné ; et
le nombre de couches de division spatiale est un nombre maximal de couches de division spatiale du groupe de multiplexage spatial dans un domaine fréquentiel.

5. Procédé selon la revendication 1, dans lequel la puissance de correction normalisée de chacun des canaux d'antenne est calculée sur la base de la formule suivante : $\overline{E} \left(ka,k_MU\right) = \frac{E \left(ka,k_MU\right)}{RBNum \left(k_MU\right)} + Pf _ Ant \left(k_MU\right) \frac{Δ {E}_{BF} \left(ka,k_MU\right)}{RBNum \left(k_MU\right)} + ε ,$ dans lequel *E(ka,k_MU)* est la puissance de correction normalisée d'un *ka*^{ème} canal d'antenne dans un groupe de multiplexage spatial *k,* E(*ka,k_MU*) est la puissance pondérée du *ka*^{ème} canal d'antenne dans le groupe de multiplexage spatial *k* à un poids de précodage d'une bande de fréquence correspondant au *ka*^{ème} canal d'antenne, *RBNum(k_MU)* est un nombre de RB planifiés du groupe de multiplexage spatial *k, Pf_Ant(k_MU)* est le facteur de contrôle de puissance du groupe de multiplexage spatial *k,* Δ*E_{BF}*(*ka,k_MU*) est une différence entre la valeur de puissance maximale et la puissance pondérée du *ka*^{ème} canal d'antenne dans le groupe de multiplexage spatial *k*, et *ε* est une quantité d'ajustement additive de puissance.

6. Procédé selon la revendication 1, dans lequel le facteur de distribution de puissance de chacun des canaux d'antenne est calculé sur la base de la formule suivante : $ρ \left(ka,k_MU\right) = \sqrt{Pbase _ Ant / \overline{E} \left(ka,k_MU\right)} ;$ dans lequel *ρ*(*ka,k_MU*) est un facteur de distribution de puissance d'un *ka*^{ème} canal d'antenne dans un groupe de multiplexage spatial *k, Pbase_Ant* est la puissance de référence du groupe de multiplexage spatial *k,* et E̅(*ka,k_MU*) est la puissance de correction normalisée du groupe de multiplexage spatial *k*.

7. Procédé selon l'une quelconque des revendications 1 à 6, après la détermination (110) du facteur de contrôle de puissance et de la puissance de référence des canaux d'antenne dans le groupe de multiplexage spatial, comprenant en outre :
le transfert (205) du facteur de contrôle de puissance et de la puissance de référence à une couche physique à travers une couche de contrôle d'accès au support, MAC ; et
le calcul du poids de précodage correspondant à chacun des canaux d'antenne dans le groupe de multiplexage spatial à travers la couche physique.

8. Procédé selon l'une quelconque des revendications 1 à 7, dans lequel la transmission (130), en fonction du facteur de distribution de puissance et du poids de précodage de chacun des canaux d'antenne, des données à travers le canal d'antenne respectif comprend :
l'application (209) du facteur de distribution de puissance de chacun des canaux d'antenne à chacun des canaux d'antenne pour ajuster la puissance de transmission de chacun des canaux d'antenne ;
l'application (210) du poids de précodage de chacun des canaux d'antenne à des données correspondant à chacun des canaux d'antenne, et la transmission des données à travers chacun des canaux d'antenne sur la base de la puissance de transmission de chacun des canaux d'antenne.

9. Appareil de transmission de données, comprenant :
un module de détermination de paramètres (310), qui est configuré pour déterminer un facteur de contrôle de puissance de canaux d'antenne dans un groupe de multiplexage spatial en égalisant un rapport signal sur interférence plus bruit, SINR, de chaque utilisateur parmi différentes couches de division spatiale du groupe de multiplexage spatial, et déterminer la puissance de référence des canaux d'antenne dans le groupe de multiplexage spatial en fonction d'un nombre de blocs de ressources, RB, non planifiés, de la puissance de base d'un seul RB et du partage de puissance entre porteuses du groupe de multiplexage spatial ;
un module de distribution de puissance (320), qui est configuré pour : calculer la puissance pondérée de chacun des canaux d'antenne à un poids de précodage d'une bande de fréquence correspondant à chacun des canaux d'antenne ; déterminer une valeur de puissance maximale parmi la puissance pondérée correspondant à chacun des canaux d'antenne, calculer une différence entre la valeur de puissance maximale et la puissance pondérée correspondant à chacun des canaux d'antenne, et calculer une puissance de correction normalisée de chacun des canaux d'antenne en fonction de la différence de chacun des canaux d'antenne, du facteur de contrôle de puissance, de la puissance pondérée correspondant à chacun des canaux d'antenne et d'un nombre de RB planifiés ; et calculer un facteur de distribution de puissance de chacun des canaux d'antenne en fonction de la puissance de référence et de la puissance de correction normalisée de chacun des canaux d'antenne ; et
un module de transmission (330), qui est configuré pour transmettre, en fonction du facteur de distribution de puissance et du poids de précodage de chacun des canaux d'antenne, des données à travers un canal d'antenne respectif.

10. Nœud de communication, comprenant :
un ou plusieurs processeurs (410) ; et
un appareil de stockage (420), qui est configuré pour stocker un ou plusieurs programmes ;
dans lequel les un ou plusieurs programmes, lorsqu'ils sont exécutés par les un ou plusieurs processeurs (410), amènent les un ou plusieurs processeurs (410) à réaliser le procédé de transmission de données selon l'une quelconque des revendications 1 à 8.

11. Support de stockage lisible par ordinateur stockant un programme informatique, dans lequel le programme, lorsqu'il est exécuté par un processeur, réalise le procédé de transmission de données selon l'une quelconque des revendications 1 à 8.
